# EUROPEAN PATENT SPECIFICATION

(11) **EP 1 278 438 B1**
(45) Date of publication and mention of the grant of the patent: **23.06.2004**
(21) Application number: 01923983.9
(22) Date of filing: 11.04.2001
(51) Int. Cl.: A45D 31/00

(54) **METHOD FOR THE MANUFACTURE OF AN ARTIFICIAL NAIL**
VERFAHREN ZUR HERSTELLUNG VON EINEM KÜNSTLICHEN NAGEL
PROCEDE DE FABRICATION D'ONGLE ARTIFICIEL

(30) Priority: 11.04.2000 NL 1014907; 28.11.2000 NL 1016716
(43) Date of publication of application: 29.01.2003
(73) Proprietor: Elenbaas, Caroline Simone, 4461 PK Goes (NL)
(72) Inventor: Elenbaas, Caroline Simone, 4461 PK Goes (NL)
(74) Representative: Kupecz, Arpad
(86) International application number: PCT/NL2001/000291
(87) International publication number: WO 2001/076407

(56) References cited:
- WO-A-96/16568
- FR-A- 2 677 332
- GB-A- 2 177 599
- NL-C- 1 011 630
- US-A- 4 361 160
- US-A- 5 860 429

## Description

The present invention relates to a method for the manufacture of an artificial nail, which comprises placing a mouldable and curable material into a mould, allowing the material to cure, and removing the thus formed artificial nail from the mould. The invention also relates to an artificial nail manufactured according to such a method.

The manufacture of artificial nails according to the method described above is generally known in the art. To this end a mould formed like an artificial nail is filled with a mouldable, for example, liquid and curable plastic and this plastic is allowed to cure, after which it can be removed from the mould. According to this method, an artificial nail is obtained ready for use. As such artificial nails generally do not already possess the desired colour, said artificial nails are often decorated only after their application on the natural nail. Decoration may involve coating with a nail varnish. In special nail studios it is possible to have the appropriate desired decoration applied on the nail by means of, for example, air brushing. This method is very labour-intensive. Consequently the costs are high.

An object of the invention is therefore to provide a simplified method for the manufacture of an artificial nail, with which it is possible to apply on the artificial nail any decoration desired simultaneously with the manufacture of the artificial nails. An object of the invention is also to provide an environmentally friendly method for the manufacture of artificial nails. A particular object is to provide a method wherein it is not necessary to use nail varnish for obtaining a desired colour and surface finish on an artificial nail. It is a further object of the invention to provide a cheap method of manufacture for an artificial nail. It is also an object of the invention to provide a method by which any desired decoration can be applied on the artificial nail.

To this end a method as mentioned in the preamble is provided in accordance with the invention, characterized in that in a first step the method in addition comprises a decorative element being placed in the mould, such that the decorative element forms the top side of the formed artificial nail and the decorative element is bonded with the curable material. By this method the above mentioned objectives can be achieved. In particular, the invention provides a method by which it is very simple to obtain excellent bonding between the basic material of the artificial nail and the decorative element. According to this method it is further possible, to manufacture artificial nails with a desired decoration in a manner that in terms of environment is very friendly.

According to a preferred embodiment, the decorative element is formed by a film material. According to another preferred embodiment, the film material and the curable material are made of same material. This means that the final artificial nail is a mono product, being a product comprised of one single material. According to a particular preferred embodiment, this material is an acrylonitrile butadiene styrene resin.

According to a further preferred embodiment, the curable material is added at a temperature of 200-300°C, preferably at a temperature of 240-260°C, while according to yet another preferred embodiment, the film material fuses at least partly, resulting in an excellent bonding between the film material and the curable material. This is in particular well possible when both components consist of the same material, and/or they have at least substantially the same softening or fusion temperature. This provides a very strong and solid bond between the originally separate components, resulting in the aforementioned mono product. In this way damage to the artificial nail is to a large extent avoided, in contrast with the usual artificial nails that are finished with nail varnish. The method is especially convenient if the materials soften, or melt at least partly at the processing temperature, because in that case no solvents are required.

The decoration applied on the artificial nail, and which forms part of the film material, may comprise any desired image. It is also possible, for example, to make the decorative element in the form of a hologram, or a fluorescent or otherwise luminous surface. Of course, it is also possible to have decorative elements projecting from the top surface of the artificial nail to be manufactured, for which purpose the mould may also be provided with recesses for receiving said projecting elements during the manufacture of the artificial nail.

The invention will now be elucidated with reference to the drawing.
Figures 1 to 3 show various steps in the forming of an artificial nail according to the present method.
Figure 4, shows a particular embodiment of a bottom mould.

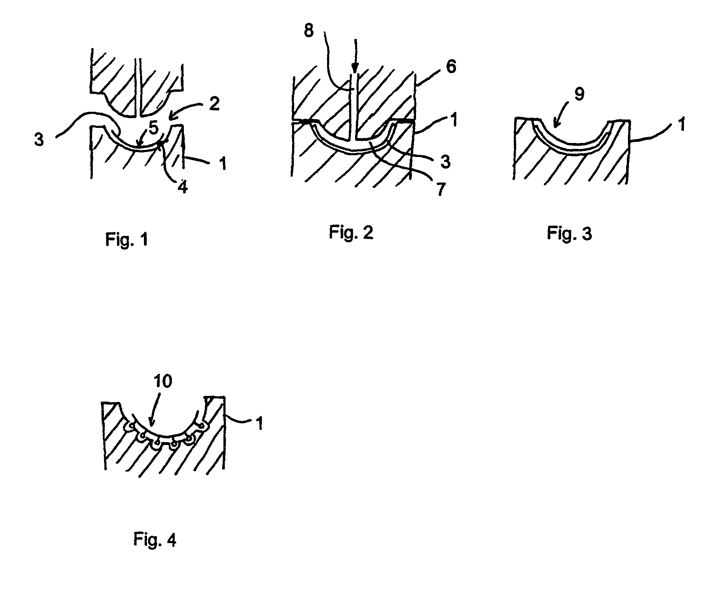

According to the method of the present invention, it is very simple to manufacture an artificial nail provided with an appropriate desired decoration. To begin with, the decoration is applied to a film material. In the drawing a mould is used consisting of two mould halves; a bottom half of a mould or bottom mould, and a top half of a mould or top mould. As shown in Figure 1, a film material 3 is placed into a bottom mould 1, which is provided with a depression 2. The film material has a first main surface 4 and a second main surface 5. The main surface 4 is provided with a desired decoration, and lies on the surface of the bottom mould 1. Figure 2, shows a following step in a method for the manufacture of an artificial nail according to the invention. In this case the main surface 4 of the film material 3 lies on the shaped surface of the bottom mould 1. A top mould 6 is now placed on the bottom mould 1. This creates a space 7 the location of the artificial nail to be formed. Via an inlet opening 8, mouldable material is injected in an arbitrary direction (see arrow) into the space 7. This occurs under such pressure that the space 7 is completely filled, while there are also outlet openings provided (not shown). Preferably the material of the film material at the second main surface 5 consists of the same material as the injected mouldable material. When the entire space 7 has been filled, the injected curable material is allowed to cool, or to cure in another way, after which the top mould 6 is removed. To this end the two mould halves may be provided with cooling facilities.

Figure 3 shows that the top half of the mould 6 is removed, leaving a moulded artificial nail 9 in the bottom half of the mould 1. Naturally, this process may also take place the other way around, leaving the artificial nail 9 at the top half of the mould 6. In the embodiment represented here, the film material is not distributed over the entire mould surface, which is, of course, also possible. The artificial nail may now simply be removed from the mould 1.

In accordance with an advantageous embodiment, the curable material from which the artificial hail is manufactured, is an acrylonitrile butadiene styrene resin. After curing, this material has sufficient rigidity and is sufficiently tear and break resistant. The film material is preferably also an acrylonitrile butadiene styrene resin material. If the image is desired to have a particular appearance, e.g. with respect to gloss, or another decorative quality, the film material may be laminated, wherein the side of the film material that, as represented in the Figures 1 to 3 faces upwards, is provided with a same material as the curable and mouldable material, for example, the acrylonitrile butadiene styrene resin material, from which the basic part of the artificial nail is formed. In that case an excellent bond will be obtained between the injected curable and mouldable material, and the film material. Because of the elevated temperature of the injected curable material, at least a part of the material present on the film material will melt, so that after curing an excellent bond is obtained.

When the artificial nail is ready, it may be fixed in a known manner to the natural nail, for example, by means of adhesive or with the aid of adhesive strips known in the art.

The invention is not limited to the application, of a film material to a basic layer of an artificial nail as represented in the figures and as described above. According to the method of the invention, other types of material may be included in an artificial nail.

For example, Figure 4 shows an embodiment in which, instead of the film material shown in the figures, a decorative element 10 is applied in the bottom mould 1. In the embodiment represented, the decorative element 10 comprises a plurality of bead-like elements projecting into recesses 11 provided for this purpose in the bottom mould 1. Preferably, these elements fit exactly in these recesses. In a manner similar to that represented in the figures 1 to 3, it is now possible after a top mould 6 has been applied, to inject curable and mouldable material via the inlet opening 8 into the space 7 containing the decorative element 10. After that, an artificial nail may be manufactured in the same manner as described before. The result is an artificial nail comprising bead-like elements that project slightly from the surface.

It is also possible to apply combinations of the film material 3 and decorative elements 10 shown.

It will be obvious that by means of the method according to the invention other elements than the above mentioned decorative element may be included in an artificial nail. The method is therefore very widely applicable, and provides a quick, sure and cheap way for the manufacture of artificial nails.

## Claims

1. A method for the manufacture of an artificial nail, which comprises placing a mouldable and curable material into a mould (1), allowing the material to cure, and removing the thus formed artificial nail from the mould (1), **characterized in that** in a first step the method in addition comprises a decorative element (3) being placed in the mould, and wherein in a further step the method comprises the at least partial fusion of the decorative element (3) and the curable material upon the addition of the curable material into the mould (1), such that the decorative element (3) forms the top side of the formed artificial nail and the decorative element (3) is bonded with the curable material.

2. A method according to claim 1, **characterized in that** the decorative element (3) comprises a film material (3).

3. A method according to claim 1 or 2, **characterized in that** the curable material is an acrylonitrile butadiene styrene resin.

4. A method according to claim 1 or 2, **characterized in that** the film material comprises an acrylonitrile butadiene styrene resin.

5. A method according to one of the claims 2 to 4, **characterized in that** the film material (3) and the curable material are comprised of same material.

6. A method according to one of the preceding claims, **characterized in that** the curable material is added at a temperature of 200-300°C, preferably at a temperature of 240-260°C.

## Patentansprüche

1. Verfahren zur Herstellung eines künstlichen Nagels, bei welchem ein formbares und härtbares Material in einer Form (1) angeordnet, das Material härten gelassen und der so gebildete künstliche Nagel aus der Form (1 ) entfernt wird, **dadurch gekennzeichnet, dass** das Verfahren in einem ersten Schritt zusätzlich die Anordnung eines dekorativen Elements (3) in der Form und in einem weiteren Schritt das wenigstens teilweise Schmelzen des dekorativen Elements (3) und des härtbaren Materials nach der Zugabe des härtbaren Materials in die Form (1) aufweist, so dass das dekorative Element (3) die Oberseite des gebildeten künstlichen Nagels bildet und das dekorative Element (3) mit dem härtbaren Material verbunden ist.

2. Verfahren nach Anspruch 1, **dadurch gekennzeichnet, dass** das dekorative Element (3) ein Folienmaterial (3) aufweist.

3. Verfahren nach Anspruch 1 oder 2, **dadurch gekennzeichnet, dass** das härtbare Material ein Acrylnitril-Butadien-Styrol-Harz ist.

4. Verfahren nach Anspruch 1 oder 2, **dadurch gekennzeichnet, dass** das Folienmaterial ein Acrylnitril-Butadien-Stryrol-Harz aufweist.

5. Verfahren nach einem der Ansprüche 2 bis 4, **dadurch gekennzeichnet, dass** das Folienmaterial (3) und das härtbare Material aus dem gleichen Material bestehen.

6. Verfahren nach einem der vorhergehenden Ansprüche, **dadurch gekennzeichnet, dass** das härtbare Material bei einer Temperatur von 200 bis 300°C, vorzugsweise bei einer Temperatur von 240 bis 260°C zugegeben wird.

## Revendications

1. Procédé de fabrication d'un ongle artificiel,
qui comprend
le fait de placer un matériau qu'on peut mouler et qui peut durcir dans un moule (1), de laisser le matériau durcir, et de retirer l'ongle artificiel ainsi formé du moule (1),
**caractérisé en ce que**
dans une première étape, le procédé en supplément comporte un élément décoratif (3), destiné à être placé dans le moule et dans lequel, dans une étape supplémentaire, le procédé comprend la fusion au moins partielle de l'élément décoratif (3) et le matériau durcissable lors de l'addition du matériau durcissable dans le moule (1), de telle sorte que l'élément décoratif (3) forme la face supérieure de l'ongle artificiel formé et l'élément décoratif (3) est assemblé au matériau durcissable.

2. Procédé selon la revendication 1,
**caractérisé en ce que**
l'élément décoratif (3) comprend un matériau de film (3).

3. Procédé selon la revendication 1 ou la revendication 2,
**caractérisé en ce que**
le matériau durcissable consiste en une résine acrylonitrite /butadiène/styrène.

4. Procédé selon la revendication 1 ou la revendication 2,
**caractérisé en ce que**
le matériau de film consiste en une résine acrylonitrite/butadiène/styrène.

5. Procédé selon l'un des revendications 2 à 4,
**caractérisé en ce que**
le matériau de film (3) et le matériau durcissable sont formés dans le même matériau.

6. Procédé selon l'une des revendications précédentes,
**caractérisé en ce que**
le matériau durcissable est ajouté à une température de 200-300° C, de préférence à une température de 240 à 260° C.
